Europäisches Patentamt

European Patent Office

Office européen des brevets

(11) Publication number: **0 373 126**
**A1**

# EUROPEAN PATENT APPLICATION

(21) Application number: **89830539.6**

(22) Date of filing: **06.12.89**

(51) Int. Cl.⁵: **A47J 31/40, B67D 1/00**

(30) Priority: **07.12.88 IT 6809488**

(43) Date of publication of application:
**13.06.90 Bulletin 90/24**

(84) Designated Contracting States:
**AT BE CH DE ES FR GB GR IT LI LU NL SE**

(71) Applicant: **Piana, Giusepppe Stefano**
**Via Novara 136**
**I-28078 Romagnano Sesia (Novara)(IT)**

(72) Inventor: **Piana, Giusepppe Stefano**
**Via Novara 136**
**I-28078 Romagnano Sesia (Novara)(IT)**

(74) Representative: **Saconney, Piero et al**
**c/o JACOBACCI-CASETTA & PERANI S.p.A.**
**Via Alfieri, 17**
**I-10121 Torino(IT)**

(54) **A method of preparing a drink in a drinks-vending machine, a vending machine which carries out the method and a stirring device usable in the machine.**

(57) A drink is prepared in a vending machine by the mixing of a measure of a flavouring product and a corresponding measure of diluent liquid. The flavouring product may be a solid particulate product or a fairly dense liquid. The diluent liquid may be hot or cold water, coffee, milk, etc. The two measures are discharged into a cup (B) and are then stirred so that they become intimately mixed by a device including a liquid-supply and stirring head (42) which is rotated by a motor about a vertical axis (Z). The head (42) includes at least one nozzle (64) for discharging at least one filiform jet (J₁) of liquid obliquely downwards into the cup (B). The supply head (42) preferably includes two nozzles (64,66), one of which discharges the oblique jet (J₁) and the other of which discharges another jet (J₂) of liquid towards the bottom of the cup (B).

FIG. 2

# A method of preparing a drink in a drinks-vending machine, a vending machine which carries out the method and a stirring device usable in the machine

The present invention relates to a method of preparing a drink in a drinks-vending machine, as defined in the preamble of Claim 1, to a drinks-vending machine as defined in the preamble of Claim 3 and to a device for supplying a liquid, as defined in the preamble of Claim 5.

In an example of a method and a vending machine representing the prior art closest to the invention, the inside of the machine is organised in the form of a series of stations arranged along a path. A motor-driven cup-carrier is movable along this path.

One station on the path comprises a store of disposable cups. Hoppers are situated at other stations and each contains a different powdered or granular product which is generally freeze-dried or, at · any rate, water-soluble. The most usual powdered products are soluble preparations of tea, chocolate, milk, soup and refreshing drinks. The first four are intended for the preparation of hot or cold drinks; the last for the preparation of cold drinks.

At another station, or at two other stations, are delivery nozzles for hot water and chilled water.

The machine may also include a station for supplying espresso coffee. In this case it is also possible to obtain coffee with a little milk, white coffee or cappuccino coffee if there is a hopper of powdered milk.

At yet another station there is a stirring device including a stirrer in the form of a vertical, bladed rod.

Finally, the machine includes an output station at which the cup containing the drink is supplied to the user.

In known machines of the type in question, the cycles or methods for the preparation and supply of a drink are effected automatically upon payment of a sum in tokens, coins or units from a credit card and after the desired drink has been selected by means of a key pad or the like.

When selection has taken place, the cup carrier moves to the station at which it receives a cup from the store and is then positioned under a supply outlet of one of the hoppers where the cup receives a measure of solid product; the cup carrier is then positioned under one of the hot or cold water (or coffee) nozzles, where the cup receives a measure of water (or of coffee).

As a final stage, the cup carrier moves to the stirring station where the stirrer is inserted in the liquid and rotated for the time necessary to mix the products intimately.

Finally the cup carrier moves to the output station.

This known stirring method has certain disadvantages: the most serious is that the stirrer comes into successive contact with different products and is not washed between successive operations. It is easy to imagine, for example, the taste of a lemon-flavoured refreshing drink prepared after the preparation of a chocolate drink. Moreover, if the machine is stopped for several hours, at night or at weekends, the remains of the last drink supplied become encrusted on the stirrer which is far from ideal from the point of view of hygiene.

This disadvantage could be avoided by the provision of a system for washing the stirrer in the machine between one operation and the next but this would lead to further complications in its manufacture.

Another disadvantage which it is desirable to eliminate is the need for a complex mechanism for lowering the stirrer into the cup and then raising it again (or for raising and lowering the cup carrier).

The object of the present invention is to propose a radical solution which eliminates all the aforesaid disadvantages.

According to the invention, this object is achieved by means of a method, a machine and a supply device as defined in the characterising parts of Claims 1, 3 and 5 and in the claims dependent thereon.

As will be understood, by virtue of the concept proposed, the stirring which mixes the measure of flavoured product intimately with the measure of diluent liquid takes place without any physical contact between the supply head which acts as the stirrer and the contents of the cup. A drink is thus prepared without any trace of the drink previously prepared. Moreover, the supply head-stirrer does not become encrusted.

Furthermore, the supplier-stirrer device is installed statically, in a single supply-stirring station, and does not require complex mechanisms to be associated with the stirrer or the cup-carrier for moving it up and down.

Throughout the present description and claims, the expression "flavouring product" is intended to include any solid particulate product, such as, for example, a freeze-dried product which is soluble or, at any rate can be mixed with a liquid, as well as any fairly dense fluid product, such as a syrup; moreover, the expression "diluent liquid" in the present description and in the claims is intended to include any liquid such as hot or cold water, liquid coffee or any kind, milk etc; finally, the expression "intimate mixing" and equivalent expressions are intended to include phenomena such as dissolving, dispersal and suspension.

The invention will become clearer from a reading of the detailed description which follows with reference to the appended drawings, given by way of non-limiting example, in which:

Figure 1 is a partial schematic perspective view of the inside of a drinks-vending machine equipped according to the invention,

Figure 2 is a schematic section taken in the vertical plane II-II of Figure 1 on an enlarged scale, showing a supplier-stirrer head according to a preferred embodiment of the invention and a cup situated beneath the head,

Figure 3 is a plan view of the head from below, taken on the arrow III-III of Figure 2.

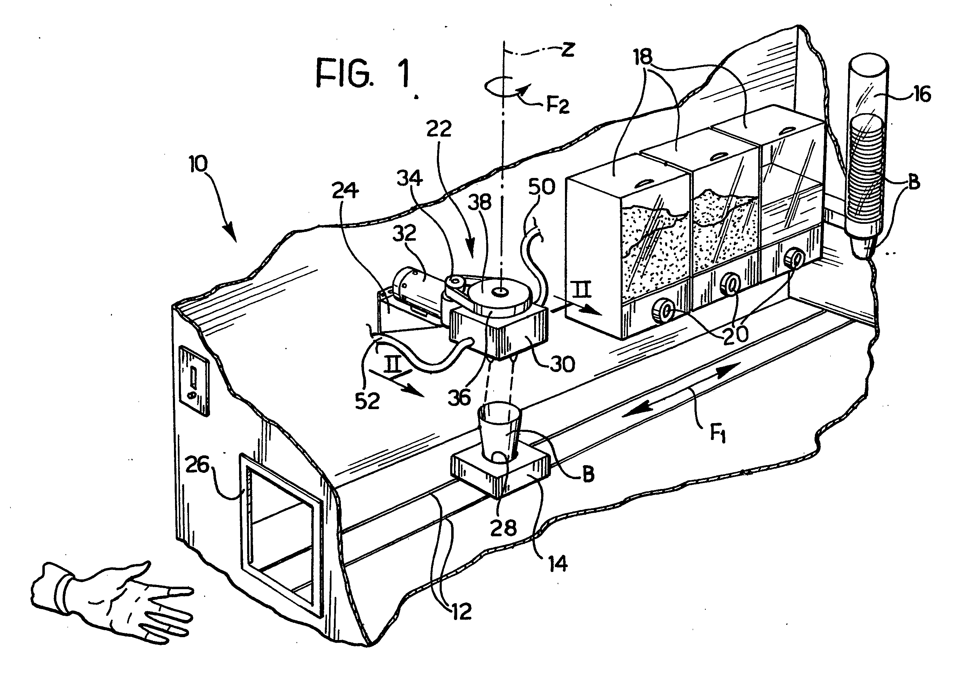

With reference to Figure 1, the casing of an automatic drinks-vending machine is generally indicated 10.

Sliding guides 12 are mounted in the casing 10 and a motor-driven trolley 14, which acts as a cup-carrier, is movable to and fro (arrow $F_1$) along the guides. At one end of the path defined by the guides 12 is a store 16 containing one or more stacks of disposable cups B.

Various hoppers or containers 18 are situated along the path defined by the guides 12 and each contains a flavouring product which, in the example shown, is in the form of a powder or granules. Each hopper 18 has a supply outlet 20 beneath it. In the case of a particulate product, each outlet 20 forms part of a duct containing a motor-driven screw, not shown, which supplies one measure of the product at a time.

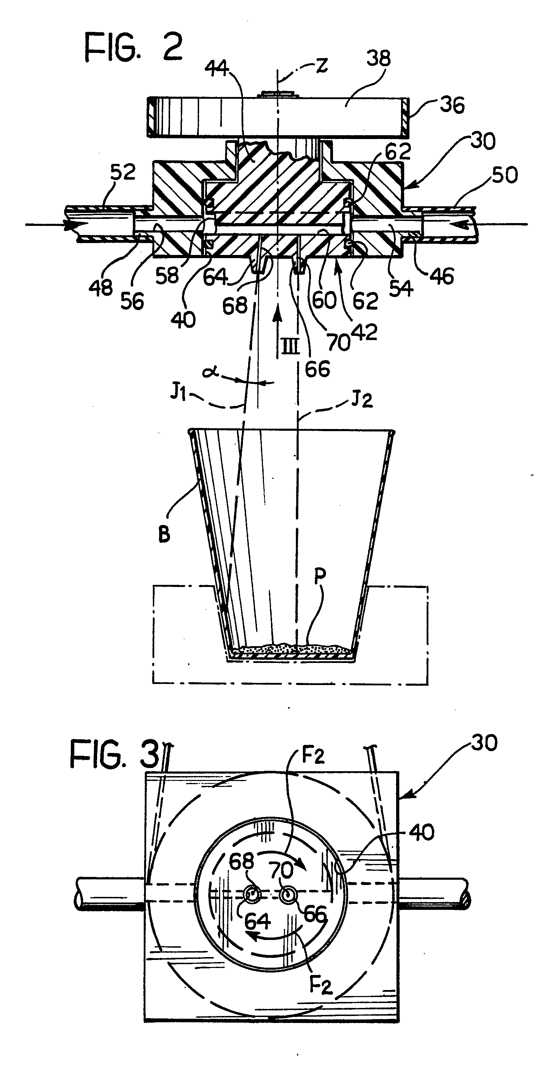

Above the path defined by the guides 12 there is also a device, which will be described in detail with reference to Figures 2 and 3, for supplying a diluent liquid, particularly hot water and chilled water. For now it suffices to say that the device 22 is a single unit mounted statically in the casing 10, for example on a support bracket 24.

At the end of the path defined by the guides 12 opposite that at which the store 16 is situated, the casing 10 has a window 26 from which users can take cups containing drinks prepared by the machine.

For the purposes of payment for the drinks and the management of the products supplied, the machine is preferably controlled by a system of the type described in Italian Patent Application No. 68093-A/88 filed on December 7, 1988 and a corresponding European Patent Application.

When the user has paid the machine for a drink and has selected a drink, the machine effects an automatic cycle during which the trolley 14 is positioned under the store 16 which drops a cup B so that it is deposited in a suitable seat 28 in the trolley 14.

The trolley 14 then moves to a station corresponding to one of the outlets 20 where a measure of the flavouring product selected is discharged into the cup.

The trolley 14 then moves to the liquid-supply station corresponding to the supply device 22. At this station, the operation which will be described with reference to Figures 2 and 3 takes place.

Finally, the trolley 14 moves to the window 26 and the user can take the cup containing the desired drink.

Figure 1 shows a fairly simple machine. The machine could also include a larger number of hoppers or even container-suppliers of flavouring liquids such as syrups, either in addition to or instead of the hoppers.

Moreover, the machine may also include a unit for preparing espresso coffee, situated at a different station in the path from those illustrated.

The system for transporting the cups between the various stations is not limited to a straight path. Thus, it could comprise a carousel or a cup-carrier mounted on an arm pivotable about a vertical axis. In these cases, the stations could be arranged along an arcuate path.

With reference again to Figure 1, the device includes a body 30 which is fixed to the housing of a geared electric motor 32 which is in turn carried by the bracket 24. The geared motor 32 has a toothed drive pulley 34 which is connected by a toothed belt 36 to a driven pulley 38. The driven pulley 38 is fixed to a rotary head which is rotatable about a vertical axis Z.

The body 30, the belt 36 and the driven pulley 38 are visible in Figures 2 and 3.

The body 30 defines a cylindrical chamber 40 whose axis coincides with the vertical axis Z in the installed condition.

A supply head 42 is mounted for rotation in the chamber 40 and may be made of a plastics material suitable for food products. The head 42 has a cylindrical shape corresponding to that of the chamber 40. It includes a hub or shaft 44 keyed to the driven pulley 38 so as to be rotatable thereby about the axis Z.

The body 30 has two inlet openings 46 and 48 located in opposite positions and connected to respective tubes 50 and 52, which are also visible in Figure 1. One of the tubes 50, 52 is for admitting pressurised hot water and the other is for admitting pressurised chilled water.

The two openings 46 and 48 put the respective tubes 50 and 52 into communication with the periphery of the chamber 40 through respective ducts 54, 56 formed in the body 30. The rotary head 42 has a peripheral groove 58 in correspondence with the openings of the ducts 54, 56. This groove 58 communicates permanently with an internal diametral duct 60 in the head 42.

Toroidal sealing rings 62 are fitted in corresponding grooves in the head 42 above and below the groove 58 and cooperate with the peripheral surface of the chamber 40, to form a seal for the pressurised water.

Frusto-conical tubular formations 64 and 66 project from the lower face of the head 42 and each constitute a nozzle. The outlets of the nozzles 64 and 66 communicate with the diametral duct 60 through respective passages 68, 70 in the form of small holes with diameters of less than one millimeter.

The passage 68 is inclined to the vertical axis of rotation Z at an angle $\alpha$ of a few degrees so as to diverge downwardly from the axis Z. The duct 70, however, is substantially parallel to the axis Z and slightly offset therefrom.

Figure 2 shows a cup B containing a measure of a flavouring product P in its bottom. The cup B is stationary beneath the head 42 in a position in which its axis coincides with the axis Z. In this condition, the programming system of the machine switches on the geared motor 32 and the head 42 is rotated for a certain period of time about the axis Z, as indicated by the arrows $F_2$ in Figure 3.

During its rotation, the head 42 receives pressurised water from one of the ducts 50 and delivers it in the form of powerful, filiform jets $J_1$, $J_2$.

By virtue of the inclination of the passage 68 of the nozzle 64, the jet $J_1$ is directed into the cup eccentrically of the axis Z and rotates on a conical surface about this axis. The jet $J_2$, however, is directed towards the bottom of the cup, near the axis of rotation Z and in a direction substantilly parallel to that axis.

The water is supplied to the cup B until the measure of water or other diluent liquid necessary for preparing the drink with the product P has been delivered.

As the cup gradually fills, the inclined jet $J_1$, which is directed towards a peripheral wall of the cup, stirs the mixture, in particular making it rotate in the sense of rotation $F_2$ of the head 42.

From the start of the supply of water, the jet $J_2$ displaces the product P from the bottom of the cup B and thus contributes to the stirring action.

When the water has been supplied, a drink is obtained, which is constituted by an intimate solution, or at any rate an intimate mixture of the two products, the flavouring and the diluent.

## Claims

1. A method of preparing a drink in a drinks-vending machine, by the mixing of a flavouring product with a measure of diluent liquid, in which first a measure of the flavouring product and then a corresponding measure of diluent liquid are discharged into a cup and the two measures in the cup are then stirred so that they become intimately mixed, characterised in that, for stirring purposes, the diluent liquid is discharged into the cup (B) in the form of at least one inclined, filiform jet ($J_1$) which rotates on a conical surface whose axis (Z) substantially coincides with the axis of the cup.

2. A method according to Claim 1, characterised in that the diluent liquid is discharged into the cup in the form of at least two filiform jets ($J_1$, $J_2$), one of which is the oblique jet ($J_1$) and another of which ($J_2$) is directed towards the bottom of the cup (B) near the axis (Z) and in a direction substantially parallel to that axis (Z).

3. A machine for vending drinks made from a measure of flavouring product and a measure of diluent liquid, including supply means (20) for discharging a measure (P) of a flavouring product into a cup (B), supply means (42) for discharging a corresponding measure of diluent liquid into the cup (B), and stirring means (42) for mixing the flavouring product intimately with the diluent liquid in the cup (B), characterised in that it includes, as the supply and stirring means, a liquid-supply head (42) which is rotatable by a motor about a vertical axis (Z) and has at least one nozzle (64) for discharging the diluent liquid into the cup (B) in the form of an oblique, filiform jet ($J_1$) which rotates on a conical surface whose axis substantially coincides with the axis (Z) of rotation of the head (42) and means (14) for positioning the cup (B) containing the measure (P) of flavouring product under the supply head (42) so that the axis of the cup (B) substantially coincides with the aforesaid axes (Z).

4. A drinks-vending machine according to Claim 3, characterised in that the supply head (42) includes at least two nozzles (64, 66) one of which is the nozzle (64) for discharging the oblique jet ($J_1$) and another (66) of which is arranged to discharge another jet of liquid ($J_2$) towards the bottom of the cup (B) near the axis (Z) and in a direction substantially parallel to that axis (Z).

5. A device for supplying a diluent liquid to a cup (B) containing a measure (P) of flavouring product in order to prepare a drink by the intimate mixing of the flavouring product and the diluent liquid, characterised in that it includes a liquid-supply and stirring head (42) rotatable by a motor about a vertical axis (Z) and having at least one nozzle (64) arranged to discharge into the cup (B) an oblique, filiform jet ($J_1$) which rotates on a conical surface whose axis substantially coincides with the axis of rotation (Z).

6. A device according to Claim 5, characterised in that the supply head (42) includes at least two nozzles (64, 66), one of which is the nozzle (64) for discharging the oblique jet ($J_1$) and another of which is arranged to discharge another jet of liquid ($J_2$) towards the bottom of the cup (B) near the axis (Z) and in a direction substantially parallel to that axis (Z).

7. A drink prepared by the method according to Claim 1 or Claim 2.

FIG. 1

EP 0 373 126 A1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 606 942 (JEDE AUTOMATER AB) <br> * Abstract; page 2, line 17 - page 6, line 25; figure 1 * <br> --- | 1,3,5,7 | A 47 J 31/40 <br> B 67 D 1/00 |
| X | EP-A-0 060 645 (MARS LTD) <br> * Page 2, line 34 - page 4, line 26; claim 4; figures 1-3 * | 1,2,7 | |
| Y | <br> --- | 3-6 | |
| Y | GB-A-1 367 354 (GKN SANKEY LTD) <br> * Page 3, column 2, line 107 - page 4, column 1, line 32; figure 3 * | 3-6 | |
| A | <br> --- | 1,2 | |
| A | GB-A-2 019 813 (WITTENBORG) <br> * Page 2, column 1, line 45 - column 2, line 1; figure 1 * <br> --- | 1-7 | |
| A | GB-A-1 093 982 (THE CORNELIUS CO.) <br> * Page 3, column 1, lines 33-61; figure 1 * <br> --- | 1,2 | TECHNICAL FIELDS SEARCHED (Int. Cl.5) |
| A | EP-A-0 159 259 (SOCIETE DE DEVELOPMENTS ET D'INNOVATIONS DES MARCHES AGRICOLES ET ALIMENTAIRES-SODIMA-UNION DE COOPERATIVES AGRICOLES) <br> * Page 6, lines 7-22; figure 2 * <br> ----- | 1 | A 47 J <br> B 67 D |

The present search report has been drawn up for all claims

| Place of search | Date of completion of the search | Examiner |
|---|---|---|
| THE HAGUE | 14-03-1990 | BODART P.A. |

EPO FORM 1503 03.82 (P0401)